# EUROPEAN PATENT SPECIFICATION

(11) **EP 1 892 968 B1**
(45) Date of publication and mention of the grant of the patent: **27.02.2013**
(21) Application number: 06752937.0
(22) Date of filing: 13.06.2006
(51) Int. Cl.: H04W 68/02, H04W 52/02, H04W 76/04, H04W 68/00, H04W 88/08

(54) **A traffic indication message sending method in a sleep mode and the device thereof**
Verkehrsindikationsnachrichts-Sendeverfahren in einem Sleep-Modus und Einrichtung dafür
Procédé d'envoi de message d'indication de trafic en mode veille et dispositif correspondant

(30) Priority: 15.06.2005 CN 200510075326
(43) Date of publication of application: 27.02.2008
(73) Proprietor: Huawei Technologies Co., Ltd., Longgang District, Shenzhen Guangdong 518129 (CN)
(72) Inventor: ZHANG, Yan, Huawei Administration Building, Shenzhen, Guangdong Province 518129 (CN); LI, Yongmao, Huawei Administration Building, Shenzhen, Guangdong Province 518129 (CN)
(74) Representative: Thun, Clemens
(86) International application number: PCT/CN2006/001307
(87) International publication number: WO 2006/133640

(56) References cited:
- EP-A- 1 530 384
- WO-A1-2005/046085
- WO-A2-2004/111763
- US-A- 5 745 860
- US-A- 5 826 173
- IEEE WIRELESS MAN 802.16E: "Part 16: Air interface for fixed and Mobile Broadband Wireless Access Systems. Amendments for Physical and Medium Access Control Layers for Combined Fixed and Mobile Operation in Licensed Bands, P802.16e/D8" IEEE DRAFT STANDARD FOR LOCAL AND METROPOLITAN AREA NETWORKS, [Online] 20 May 2005 (2005-05-20), pages 92-169, XP002480341 Retrieved from the Internet: URL:www.ieee.org> [retrieved on 2008-05-15]
- IEEE 802.16 BROADBAND WIRELESS ACCESS WORKING GROUP: "Embodied traffic indication during sleep-mode"[Online] 25 June 2004 (2004-06-25), pages 0-8, XP002480342 Retrieved from the Internet: URL:http://www.ieee802.org/16/tge/contrib/ C80216e-04_194.pdf> [retrieved on 2008-05-15]
- CHULSIK YOON ET AL: "Enhancement on Sleep Mode Operation by Grouping" INTERNET CITATION, [Online] 4 January 2004 (2004-01-04), pages 0-5, XP002346043 Retrieved from the Internet: URL:http://www.ieee802.org/16/tge/contrib/ C80216e-04_05.pdf> [retrieved on 2005-09-20]

## Description

### Field of the Invention

The present invention relates to a field of mobile communication, and particularly to a method and an apparatus for transmitting a traffic indication message from a Base Station (BS) to a Mobile Subscriber Station (MSS) in a sleep mode.

### Background of the Invention

In a mobile communication system, standby time greatly affects the moving freedom of a subscriber terminal. Two approaches may be used for prolonging the standby time: one is using high efficient batteries and the other is reducing a meaningless power consumption of a mobile terminal. Institute of Electrical and Electronic Engineers (IEEE) 802.16e is a standard being drawn for Mobile Broadband Wireless Access Systems, and the sleep mode of a mobile terminal defined in the IEEE 802.16e/D8 is the latter approach. The sleep mode refers to a process during which an air interface temporarily interrupts a connection with the BS within an interval negotiated in advance by the mobile terminal and the BS. The implementation of the sleep mode may reduce transmission requests of the mobile terminal on the uplink and downlink, thereby reducing the power consumption of the MSS.

The MSS may actively send a sleep request message, such as MOB_SLP_REQ, to a Serving Base Station (Serving BS) for requesting to enter the sleep mode. The Serving BS may respond with a sleep response message, such as MOB_SLP_RSP, to indicate whether approve or disapprove of the MSS entering the sleep mode. Optionally, the BS may also actively send a message, such as MOB_SLP_RSP message, to request the MSS enter the sleep mode, and upon receiption of the message, the MSS commonly enters the sleep mode according to parameters carried in the MOB_SLP_RSP message.

Now the above-mentioned current protocol prescribes that the MSS negotiates with the BS to classify a current service stream into three classes of sleep groups according to Quality of Service (QoS) requirement and characteristics of the stream, and uses different sleep strategies for different classes of sleep groups. Each class may include many sleep groups, a same sleep strategy and different sleep parameters are used between sleep groups of the same class, and the sleep parameters are selected according to the characteristics of the traffic included in each group. Each sleep group may include many service streams, and each service stream represents a traffic connection between the MSS and the BS, which may be an uplink or a downlink and identified by a 16-bit connection identifier (CID). The sleep state of each sleep group includes an active state and a non-active state. In the active state, the machine in sleep state of the sleep group normally operates; in the non-active state, the machine in sleep state of the sleep group is reset and stops operating. There are many sleep groups in the MSS, the time interval not overlapping interception window of each sleep group is an unavailability interval, and other time interval not overlapping the unavailability interval is an availability interval. Actually, the MSS enters the sleep mode only when it is in the unavailability interval, and meanwhile, all the sleep groups of the MSS are in a sleep window state. In the availability interval, some sleep groups may be in the sleep window state while other sleep groups may be in an interception state, and actually the MSS is in a wake state, and only the machines in sleep state of the different sleep groups are in the different states.

Power_Saving_Class_Type=1 is defined as the first class of sleep group which is generally used for a traffic without a strict real-time requirement. The sleep strategy of the first class is: a fixed length for the interception window and a variable length for the sleep window are used, the interception window alternates with the sleep window, and the length of the current sleep window is twice as long as that of the previous sleep window, then the sleep window maintains the length and alternates with the interception window till a prescribed maximum is reached. The machine in sleep state of the sleep group will not stop until the MSS or the BS initiates a change request of sleep state and sets the sleep state to the non-active state.

Power_Saving_Class_Type=2 is defined as the second class of sleep group which is generally used for the traffic of periodically transmitting data. The sleep strategy of the second class is: a fixed length for the interception window and a fixed length for the sleep window are used, and the interception window alternates with the sleep window, and the machine in sleep state of the sleep group will not stop until the MSS or the BS initiates a change request of sleep state and sets the sleep state to the non-active state.

Power_Saving_Class_Type=3 is defined as the third class of sleep group which is generally used for the multicast traffic. The sleep strategy of the third class is: the sleep window is arranged only once, after the sleep window times out, the sleep state of the sleep group is in the non-active state and the machine in sleep state stops, and it will not be activated until the MSS or the BS reactivates the machine in sleep state of this group through message interaction.

For the first class of sleep group, the BS may transmit a traffic indication message MOB_TRF_IND in the interception window of the sleep group for indicating whether traffic data for the service stream of this sleep group exists. If the traffic indication message received by each sleep group of the first class in the MSS in the availability interval indicates that the traffic data for the sleep group exits, the sleep state of the sleep group is changed to the non-active state, and the machine in sleep state is reset; otherwise, the sleep state of the sleep group is still in the active state, the machine in sleep state operates as usual and enters the sleep state after the interception window ends; if traffic data for the service stream of the sleep group exists, the sleep state of the sleep group is changed to the non-active state, and the machine in sleep state is reset.

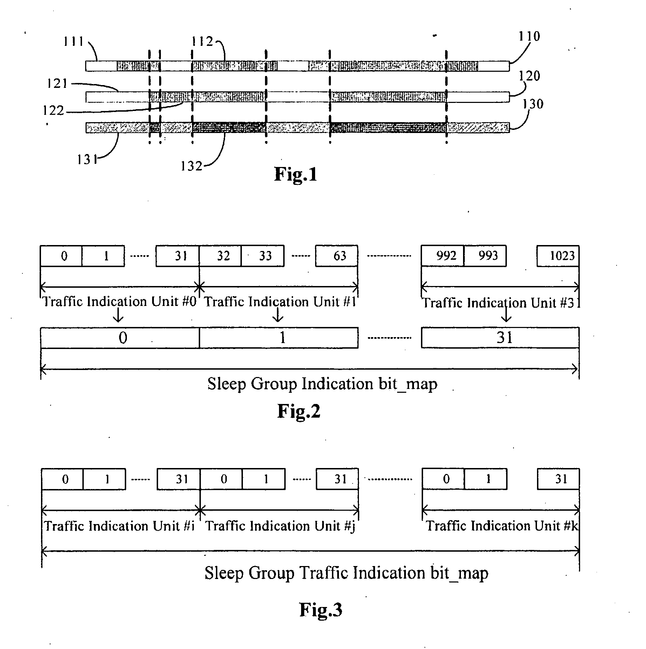

Figure 1 is a schematic diagram illustrating the sleep states of two sleep groups in one MSS, the first sleep group 110 is the first class of sleep group, the BS allocates an interception window 111 with a fixed length and a sleep window 112, the length of which is twice as long as that of the previous sleep window; and the second sleep group 120 is the second class of sleep group, the BS allocates an interception window 121 with a fixed length and a sleep window 122 with a fixed length. The oblique line area 130 shows integrated effect of the two classes of sleep groups. The oblique line area with shadow 131 represents availability intervals, and the oblique line area without shadow 132 represents unavailability intervals.

Now, the 802.16e/D8 draft has following prescriptions for designing the traffic indication message:

1. The traffic indication message is only arranged for the first class of sleep group.

2. The BS stops the active state of the sleep group of the first class by transmitting the traffic indication message.

3. If the MSS configures a flag TRF_IND_Required in the Sleep Request message MOB_SLP_REQ, then the state of the sleep group will become the non-active state automatically after the availability interval ends if the MSS does not receive the traffic indication message MOB_TRF_IND in the availability interval.

4. For the first class of sleep group, the BS may allocate a sleep group identifier (SLPID)for each sleep group for indicating different sleep groups in each MSS (each sleep group corresponds to a unique SLPID). The BS may indicate whether each sleep group has traffic transmitted through the SLPID in the traffic indication message MOB_TRF_IND.

In this mode, the traffic indication is performed on the basis of the SLPID, and the traffic indication of the related sleep groups is performed by using two map tables, SLPID Group Indication bit_map and traffic indication bit_map.

The SLPID Group Indication bit_map is shown in Figure 2. 1024 SLPIDs are divided into 32 traffic indication units, each traffic indication unit including 32 SLPIDs and each traffic indication unit corresponding to 1 bit in the SLPID Group Indication bit_map.

Meanings of each bit are:

0: None of the sleep groups corresponding to SLPIDs in a traffic indication unit, which corresponds to the bit, has traffic indication;

1: At least one sleep group corresponding to an SLPID in the traffic indication unit, which corresponds to the bit, has traffic indication.

The traffic indication bit_map is shown in Figure 3. The traffic indication bit_map includes several traffic indication units, and these traffic indication units correspond to the traffic indication units corresponding to the bits of 1 in the SLPID Group Indication bit_map in sequence. Each traffic indication unit has 32 bits, and each bit corresponds to one SLPID in the traffic indication unit, the bit of 0 represents that the sleep group corresponding to the SLPID has no traffic, and the bit of 1 represents that the sleep group corresponding to the SLPID has traffic.

5. If all the sleep groups in the MSS have traffic indications or none of them has traffic indication, a Short Basic Connection Identifier (Short Basic CID) method may be used for unifiedly indicating each sleep group of the MSS, and if a sleep group has a traffic indication, the Short Basic CIDs of the MSS are listed; if the sleep group does not have the traffic indication, the Short Basic CIDs of the MSS are not listed.

The above solutions are generally referred to as Map Indication method and Short Basic Connection Identifier Indication method by those skilled in the art.

The format of the traffic indication message MOB_TRF_IND prescribed in the protocol is shown in Table 1:

**Table 1**

| Syntax | | Size(bits) | Notes |
|---|---|---|---|
| MOB_TRF-IND_Message_Format(){ | | | |
| Management message type =52 | | 8 | |
| FMT | | 1 | 0 : Based on SLPID indication |
| | | | 1 : Based on CID indication |
| Reserved | | 7 | Reserved bits |
| If(FMT == 0) | | | |
| { | | | |
| SLPID Group Indication bit-map | | 32 | Each bit corresponds to one SLPID group, and each SLPID group includes the SLPIDs corresponding to the 32 sleep groups (each sleep group corresponds to a unique SLPID). |
| | | | The meanings of each bit: |
| | | | 0: There is no traffic for all the 32 MSS that belong to the SLPID-Group |
| | | | 1: There is traffic for at least one MSS in SLPID-Group |
| Traffic Indication Bitmap | | variable | Traffic Indication Bitmap of the sleep group includes many 32-bit traffic indication units. Each traffic indication unit corresponds to one SLPID group. The traffic indication units are arranged in an increasing order of the SLPID. When at least one sleep group in the traffic indication unit has traffic, the traffic indication unit is added in the message. |
| | | | 0 : No traffic indication |
| | | | 1 : Having traffic indication |
| }else{ | | --- | --- |
| Num_pos | | 7 | Number of the Short Basic CID |
| for(i=0;i<Num_pos;i++){ | | --- | --- |
| Short Basic CID | | 12 | Short Basic Identifier MSS |
| } | | --- | --- |
| } | | --- | --- |
| While(! (byte_boundary)) { | | --- | --- |
| Padding bits | | <=7 | If needed, for alignment to byte boundary |
| } | | | |
| TLV_encoded items | | variable | TLV encoded information |
| | } | | |

The solution for transmitting the traffic indication message MOB_TRF_IND from the BS to the MSS in the 802.16e/D8 draft has the following disadvantages:

1. The map method is adopted when performing the sleep traffic indication with the SLPID. However, in some cases, for example, if only a few sleep groups have traffic data, the map method consumes many bandwidth resources.

2. The design of the above solution is not flexible enough, and the traffic indication is performed only by use of one of the SLPID map method and the Short Basic CID method, which adds a burden to the network.

In addition, IEEE WIRELESS MAN 802.16E discloses an air interface for fixed and Mobile Broadband Wireless Access System and Amendments for Physical and Medium Access Control Layers for Combined Fixed and Mobile Operation in Licensed Bands.

Moreover, EP1530384 discloses a method for transmitting a traffic indication message for directing a mobile subscriber station (MSS) in a sleep mode to transition to an awake mode in a Broadband Wireless Access communication system supporting the sleep mode and the awake mode. This method includes the steps of individually allocating, to MSSs belonging to a corresponding base station, corresponding areas indicating traffic instructions for the MSSs in a traffic indication field in the traffic indication message, and indicating state transition instructions in the areas allocated to the MSSs, before transmitting the traffic indication message to the MSSs.

### Summary of the Invention

An embodiment of the present invention provides a method and an apparatus for transmitting a traffic indication message from a BS to an MSS, by which the bandwidth resources are saved, the byte overhead of the traffic indication message is reduced, and the solution designing is more flexible.

A method for transmitting a traffic indication message in a sleep mode, when the MSS in a sleep group is in an active state, the method, includes: transmitting, by a BS, the traffic indication message to an MSS, and including an SLPID in the traffic indication message for indicating the sleep group in need of receiving traffic;
upon receiving the traffic indication message, changing, by the MSS, the state of corresponding sleep group to non-active, and receiving the traffic.

An apparatus for transmitting a traffic indication message in sleep mode, the traffic indication message contains a flag for indicating an indication mode of traffic transmission of a sleep group and the indication mode of the traffic transmission includes a Sleep Group Identifier Indication, said Sleep Group Identifier Indication indicating that the traffic indication message includes Sleep Group Identifiers of the at least one sleep group which is in need of receiving traffic, and the apparatus includes:
a flag information setting unit, for including a Sleep Group Identifier in a traffic indication message to indicate that a sleep group needs to receive traffic; and
a transmitting unit, for transmitting the traffic indication message.

The apparatus is in a BS.

In the solution according to an embodiment of the present invention, the BS transmits the Traffic Indication massage for indicating the indication mode of the traffic transmission of the sleep groups when the MSS is in the sleep mode, and the any mode of the traffic transmission may be flexibly carried. Therefore, the problem that only one indication mode of the traffic transmission can be selected is avoided, and the overhead of the traffic indication message is reduced and the air interface resource is saved.

### Brief Description of the Drawings

Figure 1 is a schematic diagram illustrating the states of the sleep group in the MSS according to the prior art;

Figure 2 is a schematic diagram illustrating the arrangement of the SLPID Group Indication bit_map according to the prior art;

Figure 3 is a schematic diagram illustrating the arrangement of the traffic indication bit_map according to the prior art;

Figure 4 is a schematic diagram illustrating the flow of the method for transmitting the Traffic message in the sleep mode according to an embodiment of the present invention; and

Figure 5 is a schematic diagram illustrating the flow for confirming the indication mode of the traffic transmission according to an embodiment of the present invention.

### Detailed Description of the Embodiments

Several embodiments of the present invention are further described with reference to the accompanying drawings as follows.

The solution of an embodiment of the present invention may save byte overhead of traffic indication message on the precondition that an MSS is ensured to obtain corresponding traffic indication methods through the traffic indication message. Therefore, according to embodiments of present invention, the original traffic indication message MOB_TRF_IND is modified, and a method of indicating with SLPID directly is added. Optionally, the original indication format may also be modified, and the size of flag (FMT) may range from 1 bit to 3 bits. For example, the previous two exclusive indication solutions may be modified to three indication solutions which may be selected at the same time. Each indication bit corresponds to one traffic indication method, wherein a bit of "1" represents that the traffic indication method corresponding to the bit is used, and a bit of "0" represents that the traffic indication method corresponding to the bit is not used. The format of the modified MOB_TRF_IND message is shown in Table 2.

**Table 2**

| Syntax | | Size | Notes |
|---|---|---|---|
| MOB TRF-IND Message Format() { | | | |
| Management message type =52 | | 8bits | |
| FMT | | 3bit | bit0: Map_based_format |
| | | | bit1 : SLPID based format |
| | | | bit2: |
| | | | Short_Basic_CID based format |
| reserved | | 5bits | Reserved bits |
| If(FMT_bit0 = 1) | | ---- | ---- |
| { | | ---- | ---- |
| SLPID Group Indication bit-map | | 32 | Each bit corresponds to one SLPID group, and each SLPID group includes the SLPIDs corresponding to 32 sleep groups (each sleep group corresponds to a unique SLPID). The meaning of each bit: |
| | | | 0: There is no traffic for all the 32 MSS that belong to the SLPID group |
| | | | 1: There is traffic for at least one MSS in |
| | | | SLPID-Group |
| Traffic Indication Bitmap | | variable | Traffic Indication Bitmap of the sleep includes many 32-bit traffic indication units. Each traffic indication unit corresponds to one SLPID group. The traffic indication units are arranged in an increasing order of the SLPID. When at least one sleep group in a traffic indication unit has traffic, the traffic indication unit is added in the message. |
| | | | 0 : no traffic indication |
| | | | 1 : Having traffic indication |
| } | | | |
| If(FMT_bit1 =1){ | | | |
| Num_SLPID_pos | | 4bits | Number of the SLPID |
| For(i=0;K Num_SLPID_pos;i++){ | | | |
| SLPID | | 10bits | The identifier of the sleep group |
| reserved | | 2bits | Reserved bits |
| } | | | |
| } | | | |
| If(FMT_bit2==1){ | | | |
| Num_CID_pos | | 4bits | Number of the Short Basic CID |
| For(I=0;I<Num_CID_pos;I++){ | | | |
| Short_Basic_CID | | 12bits | Short Basic CID of the MSS |
| } | | | |
| } | | | |
| While(! (byte_boundary)){ | | | |
| Padding bits | | <=7bits | |
| } | | | |
| TLV_encoded items | | variable | - |
| | } | | |

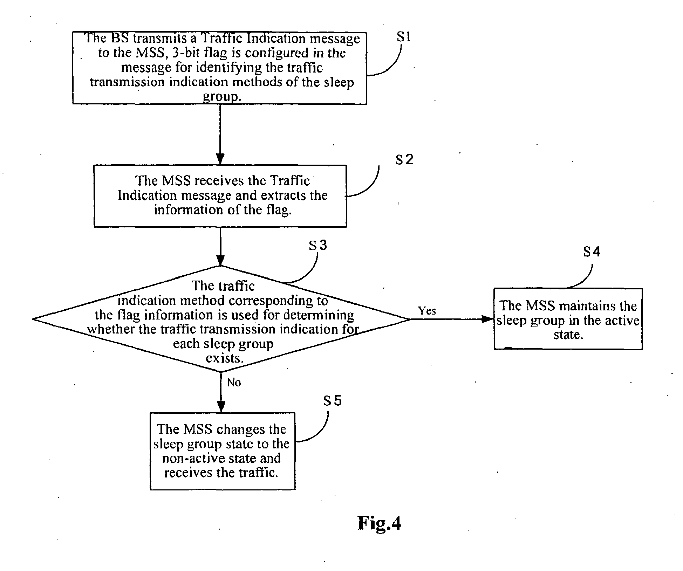

Figure 4 is a schematic diagram illustrating the flow chart of the method for transmitting the traffic indication message in the sleep mode according to an embodiment of the present invention, and as shown in Figure 4, an embodiment of the present invention mainly includes:

S 1. A BS transmits a traffic indication message to an MSS.

The BS transmits the traffic indication message to the MSS, and a flag is configured in the traffic indication message for indicating the indication mode of the traffic transmission of a sleep group; the flag occupies 3 bits, and the content indicated by the 3 bits respectively is: whether the Map Indication method is used, whether the SLPID Indication method is used and whether the Short Basic CID Indication method is used. A bit of "0" represents that the corresponding indication method is not used, and a bit of "1" represents that the corresponding indication method is used.

S2. The MSS receives the traffic indication message and extracts the information of the flag.

The MSS extracts the flag information from the traffic indication message, and the 3 bits mentioned above are used for bearing the flag information.

S3. The traffic indication method corresponding to the flag information is used for determining whether the traffic transmission indication for each sleep group exists, and if the traffic transmission indication for each sleep group exists, proceeds to step S4; if the traffic transmission indication for each sleep group does not exist, proceeds to step S5.

The MSS can obtain the traffic indication methods used in the traffic indication message according to the configuration of the 3 bits.

The 3 bits may be simultaneously set to "0" or "1" all together or partially set to "0" or "1", which shows that the solution according to an embodiment of the present invention is more flexible than the prior art.

S4. The MSS, which is indicated as traffic is transmitted, changes the state of the sleep group to the non-active state and receives the traffic.

According to a determination result, if the traffic indication for the sleep group exists, it is shown that a transmission instruction exists, and the MSS changes the state of sleep group to non-active and receives the traffic.

S5. The MSS maintains the sleep group in the active state.

According to the determination result, if the traffic indication for the sleep group does not exist, it is shown that no traffic transmission instruction exists, and the MSS maintains the sleep group in the active state.

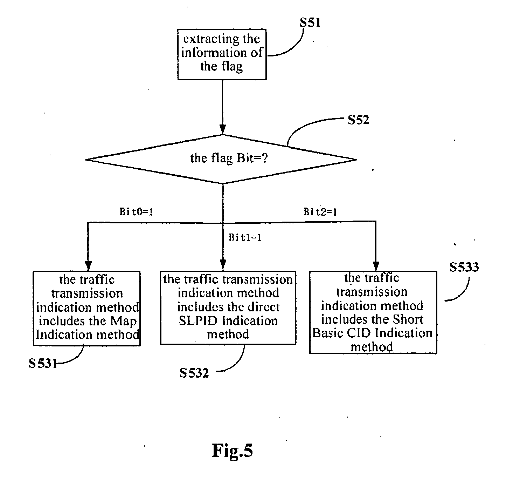

Figure 5 is a schematic diagram illustrating the flow chart for determining the type of the traffic transmission methods according to the flag, This embodiment includes: step 51, extracting the flag; step 52, resolving the information of the flag; step 531, if the Bit0 of the flag is equal to 1, it is shown that the Map Indication method is used; if the Bit1 of the flag is equal to 1, it is shown that the SLPID Indication method is used; and if the Bit2 of the flag is equal to 1, it is shown that the Short Basic CID Indication method is used. Though three bits are used for the flag in an embodiment of the present invention, the present invention is not limited to this and any number of bits may be used. For example, only one bit is used, if the bit of the flag is equal to 0, it is shown that the SLPID Indication method is used; and if the bit of the flag is equal to 1, it is shown that the Map Indication method is used.

That is to say, according an embodiment of the present invention, the configuration of the flag may be carried by the following indication modes of the traffic transmission, including the Map Indication, the SLPID Indication and the Short Basic CID Indication.

According to an embodiment of the present invention, the indication mode of directly using the SLPID refers to directly indicating the sleep group in need of receiving the traffic in the message.

When the indication mode of the traffic transmission indicated by the flag is the SLPID Indication method, the number of the SLPIDs is also carried in the traffic indication message.

In an embodiment of the present invention, the flag is configured in the traffic indication message for indicating the mode of the traffic transmission of the sleep group, and many traffic indication methods may be carried flexibly. Therefore, the problem of the prior art that only one indication mode of the traffic transmission may be selected is avoided, and the overhead of the traffic indication message is reduced as far as possible and the air interface resource is greatly saved.

An apparatus for transmitting traffic indication message in a sleep mode according to an embodiment of the present invention, includes:

a flag information configuring unit, for configuring the flag information in a traffic indication message and indicating the indication mode of the traffic indication message.

The apparatus may be in a BS.

While the present invention has been illustrated and described with reference to some preferred embodiments, the present invention is not limited to these. Those skilled in the art should recognize that various variations and modifications can be made without departing from the scope of the present invention as defined by the accompanying claims.

## Claims

1. A method for transmitting a traffic indication message in a sleep mode, wherein, when the Mobile Subscriber Station in a sleep group is in an active state, the method comprises:
transmitting, by a Base Station, the traffic indication message to a Mobile Subscriber Station (S1), and including a Sleep Group Identifier in the traffic indication message for indicating the sleep group in need of receiving traffic;
upon receiving the traffic indication message (S2), changing (S5), by the Mobile Subscriber Station, the state of corresponding sleep group to non-active to receive a traffic.

2. The method of claim 1, wherein the traffic indication message further contains a flag for indicating an indication mode of traffic transmission of a sleep group, the indication mode of the traffic transmission comprising a Sleep Group Identifier Indication, said Sleep Group Identifier Indication indicating that the traffic indication message includes Sleep Group Identifiers of the at least one sleep group which is in need of receiving traffic, wherein after receiving the traffic indication message, the method further comprises:
checking (S3) by the Mobile Subscriber Station, whether each sleep group has a traffic transmission indication according to the indication mode of the traffic transmission corresponding to the flag.

3. The method of claim 2, wherein the flag comprise at least one bit.

4. The method of claim 2, wherein the flag in the traffic indication message comprises several bits for respectively indicating several modes of the traffic transmission.

5. The method of claim 2, wherein, when the indication mode of the traffic transmission indicated by the flag is the Sleep Group Identifier Indication, the number of Sleep Group Identifiers is also carried in the traffic indication message.

6. The method of claim 4, wherein, for the several bits, the bits of "1" represents that the indication mode of traffic transmission corresponding to the bit is used and the bits of "0" represents that the indication mode of traffic transmission corresponding to the bit is not used.

7. The method of claim 3, wherein, for the bits of the flag, the bits of "1" represent that several indication modes of transmission indication are used simultaneously.

8. The method of claim 1, wherein, the checking whether each sleep group has the traffic transmission indication comprises: when the indication mode of traffic transmission is the Sleep Group Identifier Indication, the Mobile Subscriber Station determines that the sleep group corresponding to the Sleep Group Identifier needs to receive traffic.

9. An apparatus for transmitting a traffic indication message in a sleep mode, wherein, the traffic indication message contains a flag for indicating an indication mode of traffic transmission of a sleep group and the indication mode of the traffic transmission comprises a Sleep Group Identifier Indication, said Sleep Group Identifier Indication indicating that the traffic indication message includes Sleep Group Identifiers of the at least one sleep group which is in need of receiving traffic, and the apparatus comprises:
a flag information setting unit, for including a Sleep Group Identifier in a traffic indication message to indicate that a sleep group needs to receive traffic; and
a transmitting unit, for transmitting the traffic indication message.

10. The apparatus of claim 9, wherein, the apparatus is in a Base Station.

11. A Mobile Subscriber Station, comprising:
a receiving unit, adapted to receive a traffic indication message from a Base Station, which contains a flag for indicating an indication mode of a traffic transmission of the sleep group, the indication mode of the traffic transmission of the sleep group comprising a Sleep Group Identifier Indication, said Sleep Group Identifier Indication indicating that the traffic indication message includes Sleep Group Identifiers of the at least one sleep group which is in need of receiving traffic;
a checking unit, adapted to check whether each sleep group has a traffic transmission indication according to the indication mode of the traffic transmission corresponding to the flag;
if the sleep group has a traffic transmission indication, the Mobile Subscriber Station changes the state of corresponding sleep group to non-active;
if the sleep group does not have the traffic transmission indication, the Mobile Subscriber Station continues the sleep group in the active state.

## Patentansprüche

1. Verfahren zum Senden einer Verkehrsangabenachricht in einem Sleep-Modus, wobei, wenn sich die mobile Teilnehmerstation in einer Sleep-Gruppe in einem aktiven Zustand befindet, das Verfahren Folgendes umfasst:
Senden der Verkehrsangabenachricht durch eine Basisstation zu einer mobilen Teilnehmerstation (S1) und Aufnehmen einer Sleep-Gruppenkennung in die Verkehrsangabenachricht zum Angeben der Sleep-Gruppe, die Notwendigkeit hat, Verkehr zu empfangen;
beim Empfang der Verkehrsangabenachricht (S2) Umändern (S5) des Zustands der entsprechenden Sleep-Gruppe in nichtaktiv durch die mobile Teilnehmerstation, um einen Verkehr zu empfangen.

2. Verfahren nach Anspruch 1, wobei die Verkehrsangabenachricht ferner ein Flag zur Angabe eines Angabemodus der Verkehrsübertragung einer Sleep-Gruppe enthält, wobei der Angabemodus der Verkehrsübertragung eine Sleep-Gruppenkennungsangabe umfasst, wobei die Sleep-Gruppenkennungsangabe angibt, dass die Verkehrsangabenachricht Sleep-Gruppenkennungen der mindestens einen Sleep-Gruppe umfasst, die Notwendigkeit hat, Verkehr zu empfangen, wobei das Verfahren nach dem Empfang der Verkehrsangabenachricht ferner Folgendes umfasst:
Prüfen (S3) durch die mobile Teilnehmerstation, ob jede Sleep-Gruppe eine Verkehrsübertragungsangabe aufweist, die gemäß dem Angabemodus der Verkehrsübertragung ist, der dem Flag entspricht.

3. Verfahren nach Anspruch 2, wobei das Flag mindestens ein Bit umfasst.

4. Verfahren nach Anspruch 2, wobei das Flag in der Verkehrsangabenachricht mehrere Bit umfasst, um jeweils mehrere Modi der Verkehrsübertragung anzugeben.

5. Verfahren nach Anspruch 2, wobei, wenn der durch das Flag angegebene Angabemodus der Verkehrsübertragung die Sleep-Gruppenkennungsangabe ist, außerdem die Anzahl der Sleep-Gruppenkennungen in der Verkehrsangabenachricht geführt wird.

6. Verfahren nach Anspruch 4, wobei für die mehreren Bit das Bit ,,1" repräsentiert, dass der Angabemodus der Verkehrsübertragung, der dem Bit entspricht, verwendet wird, und das Bit ,,0" repräsentiert, dass der Angabemodus der Verkehrsübertragung, der dem Bit entspricht, nicht verwendet wird.

7. Verfahren nach Anspruch 3, wobei für die Bit des Flag das Bit "1" repräsentiert, dass mehrere Angabemodi der Übertragungsangabe gleichzeitig verwendet werden.

8. Verfahren nach Anspruch 1, wobei das Prüfen, ob jede Sleep-Gruppe die Verkehrsübertragungsangabe aufweist, Folgendes umfasst: wenn der Angabemodus der Verkehrsübertragung die Sleep-Gruppenkennungsangabe ist, bestimmt die mobile Teilnehmerstation, dass die der Sleep-Gruppenkennung entsprechende Sleep-Gruppe Notwendigkeit hat, Verkehr zu empfangen.

9. Vorrichtung zum Senden einer Verkehrsangabenachricht in einem Sleep-Modus, wobei die Verkehrsangabenachricht ein Flag zum Angeben eines Angabemodus der Verkehrsübertragung einer Sleep-Gruppe enthält und der Angabemodus der Verkehrsübertragung eine Sleep-Gruppenkennungsangabe umfasst, wobei die Sleep-Gruppenkennungsangabe angibt, dass die Verkehrsangabenachricht Sleep-Gruppenkennungen der mindestens einen Sleep-Gruppe umfasst, die Notwendigkeit hat, Verkehr zu empfangen, und die Vorrichtung Folgendes umfasst:
eine Flag-Informationssetzeinheit zum Aufnehmen einer Sleep-Gruppenkennung in eine Verkehrsangabenachricht zum Angeben, dass eine Sleep-Gruppe Verkehr empfangen muss; und
eine Sendeeinheit zum Senden der Verkehrsangabenachricht.

10. Vorrichtung nach Anspruch 9, wobei die Vorrichtung eine Basisstation ist.

11. Mobile Teilnehmerstation, umfassend:
eine Empfangseinheit, die dafür ausgelegt ist, eine Verkehrsangabenachricht von einer Basisstation zu empfangen, die ein Flag zum Angeben eines Angabemodus einer Verkehrsübertragung der Sleep-Gruppe enthält, wobei der Angabemodus der Verkehrsübertragung der Sleep-Gruppe eine Sleep-Gruppenkennungsangabe umfasst, wobei die Sleep-Gruppenkennungsangabe angibt, dass die Verkehrsangabenachricht Sleep-Gruppenkennungen der mindestens einen Sleep-Gruppe umfasst, die Notwendigkeit hat, Verkehr zu empfangen;
eine Prüfeinheit, die dafür ausgelegt ist, zu prüfen, ob jede Sleep-Gruppe eine Verkehrsübertragungsangabe aufweist, die gemäß dem Angabemodus der Verkehrsübertragung ist, der dem Flag entspricht;
wenn die Sleep-Gruppe eine Verkehrsübertragungsangabe aufweist, ändert die mobile Teilnehmerstation den Zustand der entsprechenden Sleep-Gruppe in nichtaktiv um; und
wenn die Sleep-Gruppe die Verkehrsübertragungsangabe nicht aufweist, setzt die mobile Teilnehmerstation die Sleep-Gruppe in dem aktiven Zustand fort.

## Revendications

1. Procédé de transmission d'un message d'indication de trafic dans un mode de veille, comprenant, quand la Station d'Abonné Mobile dans un groupe de veille se trouve dans un état actif :
la transmission, par une Station de Base, du message d'indication de trafic à une Station d'Abonné Mobile (S1) et l'inclusion d'un Identifiant de Groupe de Veille dans le message d'indication de trafic pour indiquer le groupe de veille devant recevoir le trafic ;
à la réception du message d'indication de trafic (S2), le changement (S5), par la Station d'Abonné Mobile, de l'état du groupe de veille correspondant en non actif pour recevoir un trafic.

2. Procédé selon la revendication 1, dans lequel le message d'indication de trafic contient en outre un fanion pour indiquer un mode d'indication de transmission de trafic d'un groupe de veille, le mode d'indication de la transmission de trafic comprenant une Indication d'Identifiant de Groupe de Veille, ladite Indication d'Identifiant de Groupe de Veille indiquant que le message d'indication de trafic comporte des Identifiants de Groupe de Veille de l'au moins un groupe de veille qui doit recevoir le trafic, le procédé comprenant en outre, après la réception du message d'indication de trafic :
la vérification (S3), par la Station d'Abonné Mobile, que chaque groupe de veille comporte ou non une indication de transmission de trafic en fonction du mode d'indication de la transmission de trafic correspondant au fanion.

3. Procédé selon la revendication 2, dans lequel le fanion comprend au moins un bit.

4. Procédé selon la revendication 2, dans lequel le fanion dans le message d'indication de trafic comprend plusieurs bits pour indiquer respectivement plusieurs modes de la transmission de trafic.

5. Procédé selon la revendication 2, dans lequel, quand le mode d'indication de la transmission de trafic indiqué par le fanion est l'Indication d'Identifiant de Groupe de Veille, le nombre d'Identifiants de Groupe de Veille est aussi inclus dans le message d'indication de trafic.

6. Procédé selon la revendication 4, dans lequel, pour les plusieurs bits, les bits "1" signifient que le mode d'indication de transmission de trafic correspondant au bit est utilisé et les bits "0" signifient que le mode d'indication de transmission de trafic correspondant au bit n'est pas utilisé.

7. Procédé selon la revendication 3, dans lequel, pour les bits du fanion, les bits "1" signifient que plusieurs modes d'indication de transmission sont utilisés simultanément.

8. Procédé selon la revendication 1, dans lequel la vérification que chaque groupe de veille comporte ou non l'indication de transmission de trafic comprend : quand le mode d'indication de transmission de trafic est l'Indication d'Identifiant de Groupe de Veille, la Station d'Abonné Mobile détermine que le groupe de veille correspondant à l'Identifiant de Groupe de Veille doit recevoir le trafic.

9. Appareil de transmission d'un message d'indication de trafic dans un mode de veille, dans lequel le message d'indication de trafic contient un fanion pour indiquer un mode d'indication de transmission de trafic d'un groupe de veille et le mode d'indication de la transmission de trafic comprend une Indication d'Identifiant de Groupe de Veille, ladite Indication d'Identifiant de Groupe de Veille indiquant que le message d'indication de trafic comporte des Identifiants de Groupe de Veille de l'au moins un groupe de veille qui doit recevoir le trafic, et l'appareil comprend :
une unité de réglage d'information de fanion, pour inclure un Identifiant de Groupe de Veille dans un message d'indication de trafic pour indiquer qu'un groupe de veille doit recevoir le trafic ; et
une unité de transmission, pour transmettre le message d'indication de trafic.

10. Appareil selon la revendication 9, dans lequel l'appareil se trouve dans une Station de Base.

11. Station d'Abonné Mobile, comprenant :
une unité de réception, adaptée pour recevoir un message d'indication de trafic depuis une Station de Base, lequel contient un fanion pour indiquer un mode d'indication de transmission de trafic du groupe de veille, le mode d'indication de la transmission de trafic du groupe de veille comprenant une Indication d'Identifiant de Groupe de Veille, ladite Indication d'Identifiant de Groupe de Veille indiquant que le message d'indication de trafic comporte des Identifiants de Groupe de Veille de l'au moins un groupe de veille qui doit recevoir le trafic ;
une unité de vérification, adaptée pour vérifier que chaque groupe de veille comporte ou non une indication de transmission de trafic en fonction du mode d'indication de la transmission de trafic correspondant au fanion ;
si le groupe de veille comporte une indication de transmission de trafic, la Station d'Abonné Mobile change l'état du groupe de veille correspondant en non actif ;
si le groupe de veille ne comporte pas l'indication de transmission de trafic, la Station d'Abonné Mobile maintient le groupe de veille dans l'état actif.
